# EUROPEAN PATENT SPECIFICATION

(11) **EP 1 023 244 B1**
(45) Date of publication and mention of the grant of the patent: **10.08.2005**
(21) Application number: 98942980.8
(22) Date of filing: 15.09.1998
(51) Int. Cl.: C02F 3/12, F16K 11/085

(54) **A FLUID MIXING SYSTEM**
FLÜSSIGKEITSMISCHSYSTEM
SYSTEME DE MELANGE DE FLUIDE

(30) Priority: 15.09.1997 IE 970679
(43) Date of publication of application: 02.08.2000
(73) Proprietor: Heslop, Victoria Ann, Ballymacarbry, County Waterford (IE); Murcott, Andrew James, Bishops Castle Shropshire S79 5HP (GB)
(72) Inventor: Heslop, Victoria Ann, Ballymacarbry, County Waterford (IE); Murcott, Andrew James, Bishops Castle Shropshire S79 5HP (GB)
(74) Representative: Gordon, Naoise Padhraic Edward
(86) International application number: PCT/IE1998/000075
(87) International publication number: WO 1999/014164

(56) References cited:
- EP-A- 0 068 906
- DE-A- 4 243 679
- US-A- 5 203 081

## Description

This invention relates to a fluid mixing system for digesters and in particular to a gas mixing system, using a valve for controlling the flow of a fluid.

Fluid mixing systems and various valve arrangements are widely used in industry to effect mixing of fluid - especially to ensure mixing of a liquid with a gas. Generally, in such systems, mixing of fluids is effected by sub-dividing a flow of gas into multiple flows within a liquid body to effect mixing of the fluids.

Fluid mixing systems have also been employed in anaerobic digester systems for sewage sludge and waste treatment.

Sewage sludge and waste within anaerobic digesters is biologically highly active giving rise to substantial quantities of gas including methane gas. Generally, gas production is estimated to be one to two times the volume of a digester vessel per twenty four hour period. The gas generated within the digester vessel floats to the surface of the sludge where it is usually extracted from the digester and/or stored and/or re-mixed within the digester by a fluid mixing system to effect fluid mixing.

Sewage sludge within a digester in general contains a significant amount of dry matter which is carried to the surface of the sewage sludge by the rising gas to create a scum layer. In the absence of constant mixing, the scum layer congeals to form an undesirable thick mat on the surface of the sludge.

In addition, sewage sludge and the like generally contains significant quantities of grit-type material. For effective digestion, it is necessary to either keep the grit in suspension in the sludge through effective mixing so that the grit is removed together with digested material following digestion or, alternatively, to allow the grit to settle so that the grit may be removed by flushing or mechanical means on a regular basis from the digester.

In anaerobic digestion, it is also necessary to ensure constant mixing of the sludge or other material being digested to ensure even heat distribution throughout the digester.

In order to effect mixing within anaerobic digesters various gas mixing systems have been employed including gas injection in a central draught tube mixing, central ring of gas injection pipes mixing, gas diffuser mixing and sequential unconfined gas mixing.

Sequential unconfined gas mixing is widely used as it is cheap to install and requires little maintenance. In sequential unconfined gas mixing, a plurality of gas injection ports is spread in the form of open-ended pipes over the base of a digester through which gas is sequentially injected from each gas injection port into the liquid within the digester by controlling flow of gas through each pipe. Moreover, sequential unconfined gas mixing has the advantage that grit can usually be maintained in suspension in the liquid within the anaerobic digester.

In sequential unconfined gas mixing, the number of gas injection ports within a digester must be increased as the base area of the digester is increased to ensure adequate mixing. However, as the number of injection ports is increased, the engineering complexity of the fluid mixing system is also increased. Accordingly, frequently, large volume anaerobic digesters can be unsuitable for sequential unconfined gas mixing due to the large number of gas injection ports required, the complexity of the pipes and the concomitant engineering complexity and resultant expense of sequential unconfined gas mixing.

Accordingly, in order to reduce the engineering complexity of the fluid mixing system and to facilitate increased numbers of injection ports, solenoid valves and the like which had been used to control fluid flow through the gas injection port were replaced by rotary valves.

In rotary valve systems, gas is fed to the rotary valve from a compressor or the like and multiple gas pipes extend in turn from the rotary valve to various locations within a digester tank whereby rotation of the rotary valve controls fluid flow to each of the gas injection ports. As the volume demands of digester tanks increased further, the port capacity of rotary valves was increased further to facilitate a higher number of gas injection ports. However, as will be appreciated by those skilled in the art, such fluid mixing systems relying on multiple port rotary valves in which large numbers of injection ports are required are highly complex with highly complex pipeline arrangements being necessary from the rotary valve into the digester.

For example, to achieve effective mixing in a 5,000 to 10,000m³ digester tank at least 200 gas injection ports are required. Moreover, as the digester tank volume is increased and/or the shape of the tank is varied, the length of pipe required from a rotary valve or the like within the digester which to terminate at an injection port in the desired location becomes unacceptably long. Moreover, injection ports located at the end of long pipes runs are prone to blockages.

Nevertheless, despite the inherent limitations referred to above and in order to satisfy the demands of ever increasing digester tank volumes, highly complex valve systems have been created in which the number of gas injection ports which can extend from the valve has been increased as digester tank sizes are increased.

Moreover, in order to protect the environment, digester tank capacities and the resultant demands on fluid mixing systems are likely to increase even further to meet environmental standards in relation to treatment of sewage sludge before land spreading, the prohibition of sewage dumping at sea, the requirement that sewage sludge should be recycled if possible and finally, the desire that all conurbations should treat sewage.

An object of the invention is to overcome the problems of the prior art.

A further object of the invention is to provide a modular fluid mixing system.

Yet a further object of the invention is to provide a fluid mixing system capable of providing a plurality of fluid injection ports in a high volume or capacity container.

A still further object of the invention is to provide a fluid mixing system in which the length of piping required to a fluid injection port is minimised.

According to the invention there is provided a digester fluid mixing system as defined in claim 1.

Preferably, the first valve means and the second valve means are identical.

Suitably, the valve means comprises six outlet ports.

Preferably, the valve means comprises twelve outlet ports.

Advantageously, the valve means comprises four outlet ports.

Preferably, the first valve means comprises six outlet ports communicable with up to six second valve means comprising six outlet ports.

Suitably, the second valve means are communicable with up to thirty six tertiary valve means each having six outlet ports.

The digester fluid mixing system of the invention also comprises a valve used in combination with one or a plurality of other similar valves characterised in that the valve comprises a housing having one inlet port and a plurality of outlet ports and a means for sequentially communicating the inlet port with the respective outlet ports, the valve being adapted for connection to a plurality of other similar valves to form a cascade.

The outlet ports of the valve or one of the valves located at an upstream end of the cascade are connected to the inlet ports of other of the valves in the cascade which are located downstream of the upstream valve to form the cascade.

The valve is a rotary valve.

Advantageously, the communicating means comprises a rotatably mounted disk having a communicating opening extending therethrough for sequentially communicating the inlet port with the outlet ports.

Preferably, the communicating means comprises a rotatably mounted spool having a communicating opening extending therethrough for sequentially communicating the inlet port with the respective outlet ports.

Preferably, the rotary valves for use in the invention further comprises hydraulic control means for sequentially communicating the inlet port with the respective outlet ports.

Suitably, the hydraulic control means comprises a piston and a tooth and ratchet mechanism for controlling movement of the spool.

The invention also extends to a digester tank comprising a fluid mixing system as hereinabove defined.

Advantageously, the valve comprises a housing, which is adapted for cooperating with the housing of at least one other similar valves for forming a compact assembly of the valve in combination.

Preferably, the housing of the valve is shaped so that when formed into the combination with the other valve or valves, the combination defines a predetermined pattern.

The sequential unconfined gas mixing system of the invention has many advantages. Firstly, the fluid mixing system of the invention is extremely powerful as fluid exits from one injection port at a time thereby maximising the mixing energy of the fluid. Moreover, through the use of a cascading fluid mixing system, the fluid mixing system of the invention facilitates individual control of injection ports while the use of valves having a comparatively low number of outlet ports arranged in a cascading system ensures that the operation of the system of the invention is not hindered should a blockage occur in a single valve or injection port.

In contradistinction, in the multiple rotary valve systems of the prior art, a blockage in the rotary valve will, in general, cause operation of the multiple port rotary valve system to be stopped resulting in significant downtime and disruption of mixing.

Moreover, the cascading effect of the fluid mixing system of the invention is highly adaptable so that the fluid mixing system of the invention may be employed in any size or shape of digester vessels. Moreover, the fluid mixing system of the invention is adapted for use in multiple digester vessels. Accordingly, through the use of a cascading system of multiple valves having a comparatively low number of outlet ports, a simple and highly adaptable fluid mixing system is achieved which is highly efficacious at ensuring complete mixing of fluids.

As the fluid mixing system of the invention is made up of multiple valves arranged in combination, the valves may be located at remote locations such as on the edge of a digester or the like or on multiple digester vessels in proximity to the desired location of injection ports thereby minimising the length of pipe runs required. Moreover, as the cascading fluid mixing system of the invention is formed from multiple valve modules, additional valves may be simply added to the fluid mixing system of the invention as required.

Accordingly, the fluid mixing system of the invention obviates the requirement of a central pipe cluster and facilitates location of valves of the cascading system closer to the location where injection of fluid is required thereby minimising the number and length of pipe runs required in fluid mixing systems. As indicated above, the fluid mixing system of the invention, being made up of multiple communicable modular valves, facilitates isolation of individual valves and pipes thereby permitting maintenance of individual valves without interrupting mixing.

In addition, the fluid mixing system of the invention may be employed without requiring roof access to a mixing tank such as a digester vessel whilst the fluid mixing system of the invention is highly adaptable to any shape of digester tank. In addition, the fluid mixing system of the invention may be employed with multi-tank digestion using various combinations of individual modular valves within the fluid mixing system to achieve a cascading effect.

Inter-communication of multiple valves in the cascading fluid mixing system of the invention facilitates use of a single gas compressor skid to supply all the gas required by the mixing system of the invention regardless of the number of vessels requiring mixing or the size of the digester tank and the like. For example, a typical compressor gas pump skid can mix materials in a digester having a volume of up to 10,000m³ employing 216 mixing ports in one or more digester tanks where the fluid mixing system of the invention is formed from multiple modular valves having six outlet ports.

It should be noted that the number of injection ports required to achieve effective fluid mixing is determined by the volume of the fluid requiring mixing and the nature of the fluid. In the case of anaerobic digestion, a single digester tank of 2,500m³ capacity with a height of 10 metres typically requires 50 to 100 injection ports to ensure effective mixing. However, the actual number of injection ports depends on the type of material requiring mixing and the difficulty experienced in mixing. A typical guide rule would be that one injection port is required per 5m² of a digester tank bottom wall for easily mixed materials and one port per 2m² of digester tank bottom wall for materials that are difficult to mix.

The ease with which injection ports employ the cascading fluid mixing system of the invention can be located in digester tanks and the like of varying shapes and sizes ensures the inhibition of scum layer formation on the surface of sludge and the like.

The rotary valve for use in the present invention is particularly suitable for putting the fluid mixing system of the invention into effect.

The rotary valve for use in the invention, in contradistinction with the valves of the prior art which have been engineered to include increasing numbers of outlet ports, has a reduced or comparatively low number of outlet ports. More particularly, the rotary valve for use in the invention is adapted for modular applications and is provided with six outlet ports which by combining multiple valves in cascading combinations are adapted to produce a high number of injection ports which can be varied in number and positioned as required in tanks and the like.

The number of outlet ports is selected so that multiple valves may be combined to result in a cascading effect to maximise the number of injection ports. In order to achieve such a cascading effect, a four port, six port or twelve port valve could be employed. However, a six port valve is preferred as six ports can be divided by two and by three thereby increasing the permutations and combinations possible in the cascading effect.

The rotary valve for use in the invention is preferably driven by a hydraulic piston which can also be located so that the piston seal is internal of the valve to ensure the fluid tight nature of the rotary valve.

In an alternative form of the invention, a twelve port valve could also be employed as permutations and combinations of pipes and injection ports in multiples of two, three, four, six and twelve could be employed. However, a six port valve is preferred as such a valve is likely to be of greater utility in practise. An advantage of a six port valve is that by employing primary and secondary valves in various combinations to arrive at the fluid mixing systems of the invention, the six port valve can give up to 36 outlets while with a system of the invention including a combination of tertiary valves up to 216 outlets may be achieved. Moreover, in a six port valve, the pipes extending from the outlet ports of the six port valve may be arranged in a neat triangular cluster such that six triangular cluster valves of the invention may be neatly assembled to form a hexagon to give a compact installation.

Various embodiments of the invention will now be described, by way of example only, having regard to the accompanying drawings, in which:
Fig. 1 is a front elevation of anaerobic digester fluid mixing system of the prior art;
Fig. 2 is a schematic representation of the fluid mixing system of Fig. 1 fitted in a digester tank;
Fig. 3 is a schematic representation of the arrangement of gas injection ports of the fluid mixing system of Figs. 1 and 2;
Fig. 4 is a schematic representation of a gas bubble exiting from a gas injection port in a digester tank containing sewage sludge and rising to the surface of the sludge;
Fig. 5 is a schematic representation of a fluid mixing system in accordance with the present invention;
Fig. 6 is a perspective view from above and one side of a valve for use in the fluid mixing system of Fig. 5;
Fig. 7 is an exploded perspective view from above and one side of the head, rotary valve portion and base of the valve of Fig. 6;
Fig. 8 is a top plan view of the valve for use in the invention;
Fig. 9 is a bottom plan view of the (base of the) valve;
Fig. 10 is a bottom plan view of the head of the valve;
Fig. 11 is a top plan view of the rotary valve portion of the valve;
Fig. 12 is a bottom plan view of the rotary valve portion;
Fig. 13 is a partially cut away transverse cross-section along the line XIII-XIII of Fig. 12 showing the slot of the rotary valve portion;
Fig. 14 is a top plan view of the base of the rotary valve;
Fig. 15 is a top plan view of an alternative rotary valve portion of the valve for use in the invention;
Fig. 16 is a bottom plan view of the alternative rotary valve portion of Fig. 15;
Fig. 17 is a top plan view of a valve block for use with the fluid mixing system and therein comprised valve of the invention;
Fig. 18 is a bottom plan view of the valve block of Fig. 17;
Fig. 19 is a perspective view from above and one side of a port insert for the valve block;
Fig. 20 is a perspective view from above and one side of a coupling for inserting in the port insert of Fig. 19;
Fig. 21 is a schematic representation of a digester tank having a substantially frusto-conical shaped floor fitted with a fluid mixing system of the prior art;
Fig. 22 is a schematic representation of the digester tank of Fig. 21 fitted with a fluid mixing system of the invention;
Fig. 23 is a schematic representation of an egg-shaped digester fitted with a fluid mixing system of the prior art;
Fig. 24 is a schematic top plan view of the digester of Fig. 23 fitted with a fluid mixing system in accordance with the invention;
Fig. 25 is a schematic representation of a cylindrical-shaped digester having its longitudinal axis disposed horizontally fitted with a fluid mixing system of the prior art;
Fig. 26 is a schematic plan view from above of the digester of Fig. 25 fitted with a fluid mixing system of the invention;
Fig. 27 is an alternative arrangement of a fluid mixing system in accordance with the invention in the digester of Fig. 26;
Fig. 28 is an end elevation of yet an alternative arrangement of a fluid mixing system in accordance with the invention in the digester of Fig. 27;
Fig. 29 is a schematic side elevation of a multiple-tank digester fitted with a fluid mixing system of the prior art;
Fig. 30 is a schematic representation of the digester of Fig. 29 fitted with a fluid mixing system in accordance with the present invention;
Fig. 31 is a schematic view from above of two cylindrical digester tanks fitted with a fluid mixing system of the prior art;
Fig. 32 is a schematic elevation from above of the digester tanks of Fig. 31 fitted with a fluid mixing system in accordance with the invention;
Fig. 33 is a perspective from above and one side of a second embodiment of a valve for use in the invention;
Fig. 34 is a top plan view of the valve of Fig. 33;
Fig. 35 is a bottom plan view of the valve of Fig. 33;
Fig. 36 is a cross-sectional view along the line XXXVI - XXXVI of Fig. 35;
Fig. 37 is a cross-sectional top plan view along the line XXXVII - XXXVII of Fig. 36;
Fig. 38 is a top plan view of the rotary disk of the valve of Fig. 33;
Fig. 39 is a top plan view of the rotary disk of Fig. 38 mounted in the valve of Fig. 33 with all but one outlet port shown in broken lines;
Fig. 40 is a top plan view of a system for use in the invention made up of the valves of Fig. 33, and
Fig. 41 is a bottom plan view of the system of Fig. 40.

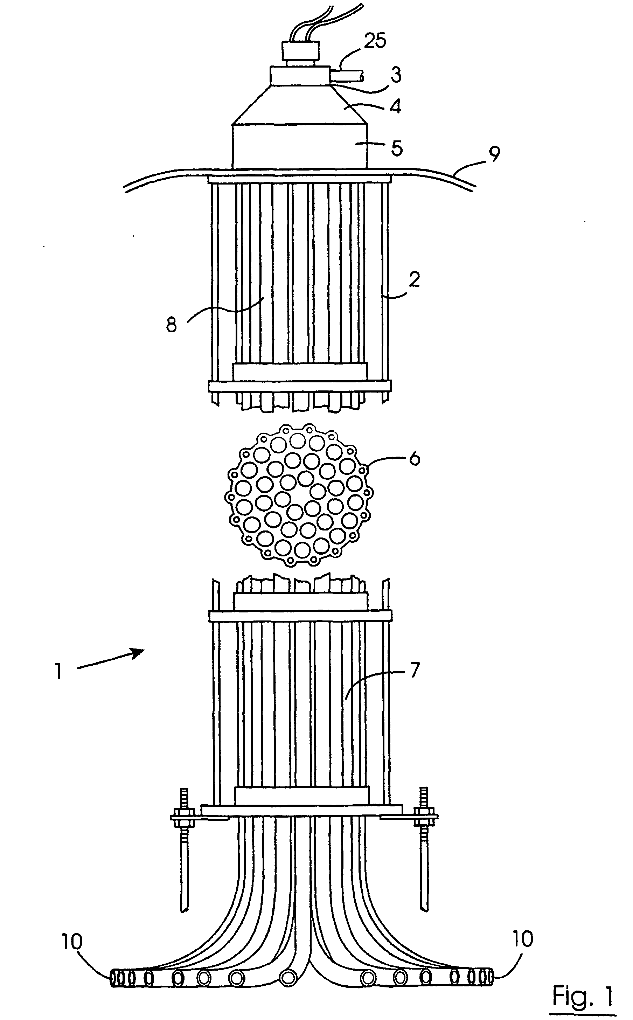

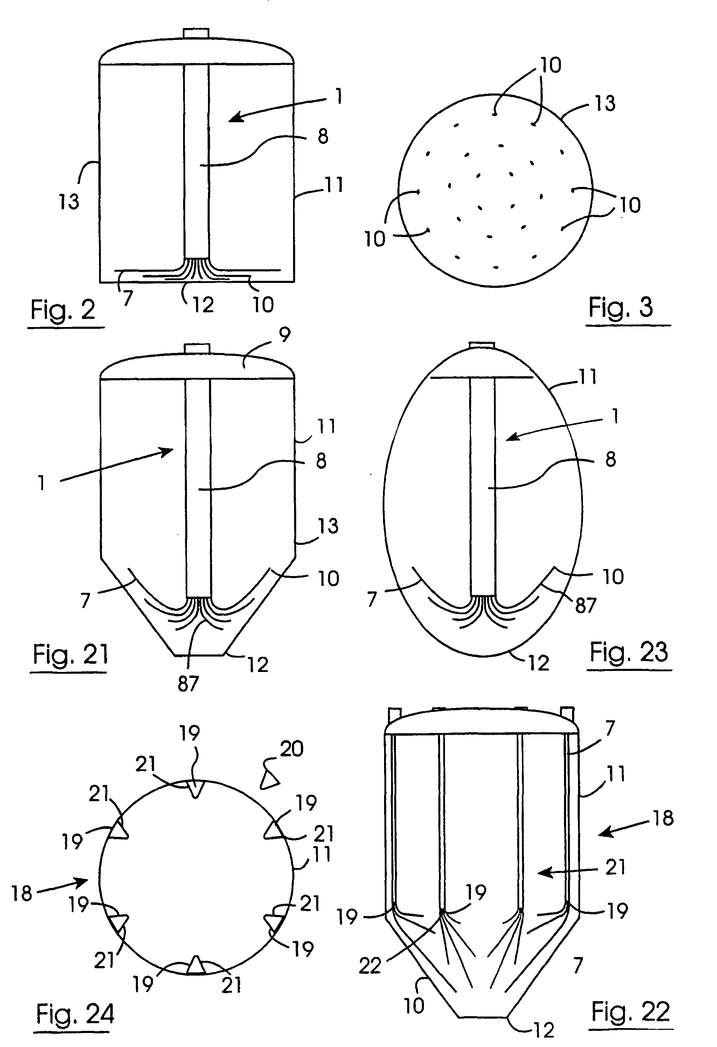

Figs. 1 to 4 show a sequential unconfined fluid mixing system, generally indicated by the reference numeral 1, of the prior art. More particularly, the fluid mixing system 1 of the prior art is adapted for sequential unconfined gas mixing in anaerobic digesters. As shown in the drawings, the fluid mixing system 1 of the prior art is located within a substantially cylindrical shaped digester tank 11 having its longitudinal axis disposed in a substantially vertical disposition and having a digester tank floor 12 and a digester tank side wall 13 upstanding therefrom. The digester tank 11 is provided with a roof 9 while a support frame 2 extends between the digester tank floor 12 and the roof 9 to support the fluid mixing system 1.

The fluid mixing system 1 is provided with a primary gas inlet port 3 located externally of and on the digester tank roof 9. The primary gas inlet port 3 receives gas through a primary gas pipe 25 in communication with the primary gas inlet port 3 which is in turn in communication with a gas storage tank or compressor (not shown) which stores/conveys gas released from within the digester tank 11 to the system 1.

The primary gas inlet port 3 is in turn in communication with a multiple port rotary valve 4. For example, the multiple port rotary valve 4 is a thirty six port rotary valve. The multiple port rotary valve 4 is mounted on a valve block 5 which in turn is adapted to communicate with pipes 7 extending from the valve block 5 through the digester tank roof 9 into the digester tank 11. Accordingly, where the fluid mixing system 1 of the prior art is adapted to operate at maximum capacity, thirty six pipes 7 extend from the multiple port rotary valve 4. The multiple port rotary valve 4 is adapted to select a pipe 7 for injection of gas through the pipe 7 into the digester tank 11.

The pipes 7 are arranged in a centrally located vertical pipe column/cluster 8 within the digester tank 11 disposed along the central longitudinal axis of the tank 11. The pipe column 8 is supported by the support frame 2 in pipe transverse support brackets 6 arranged between the digester tank roof 9 and digester tank floor 12 about the pipe column 8.

Each pipe 7 defines an injection port 10 at its free end from which gas from the primary gas pipe 25 is injected through the multiple port rotary valve 4 into the digester tank 11.

The pipes 7 of the pipe column 8 are of varying lengths and are located adjacent the digester tank floor 12 so that the injection ports 10 of the pipes 7 are evenly distributed across the digester tank floor 12.

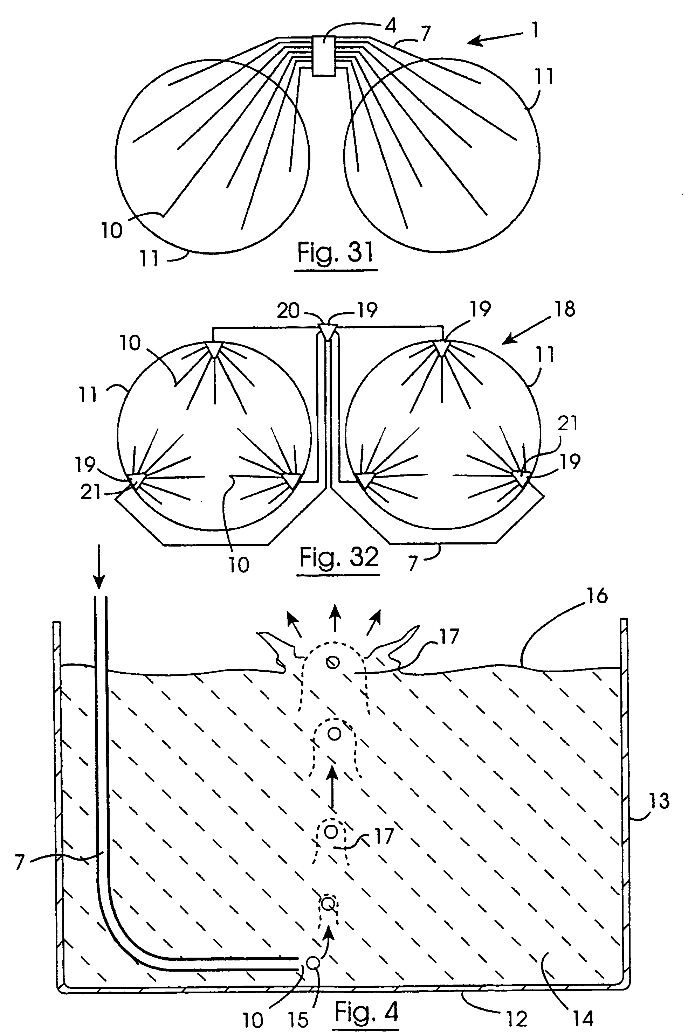

Accordingly, as shown in Fig. 4, gas passed through the multiple port rotary valve 4, through the pipes 7 and in turn from the injection ports 10 emerges into sludge 14 within the digester tank 11 adjacent the digester tank floor 12 as a gas bubble 15. The gas bubble 15 then rises towards the surface 16 of the sludge 14 whilst accumulating dry matter, indicated by the reference numeral 17, about the external surface of the gas bubble 15 as the gas bubble 15 travels towards the surface 16 of the sludge 14.

Dry matter accumulates about the gas bubble 15 in a "snowballing" effect until the gas bubble 15 explodes at the surface 16 thereby effecting mixing of the sludge 14 and the gas from the injection port 17 within the digester tank 11.

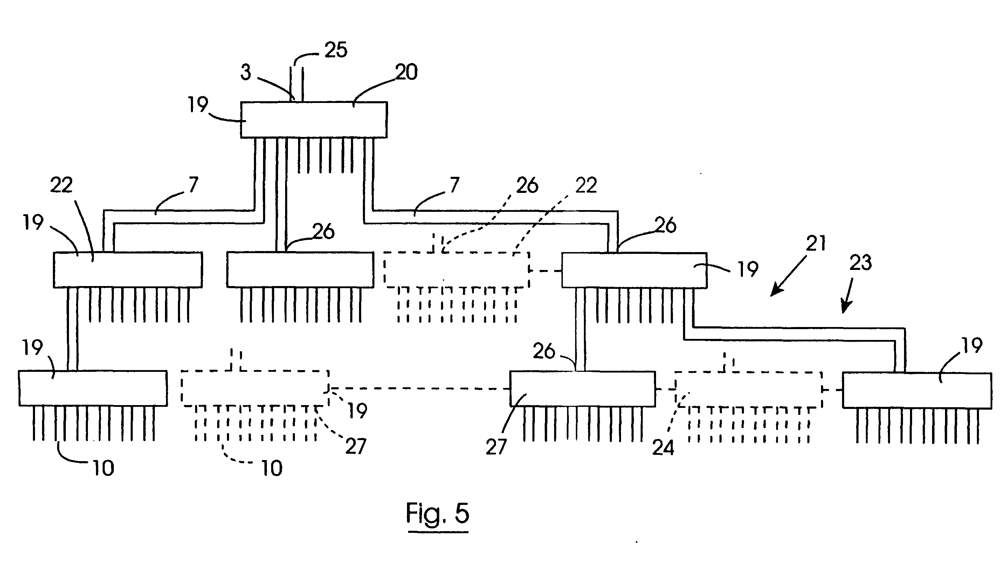

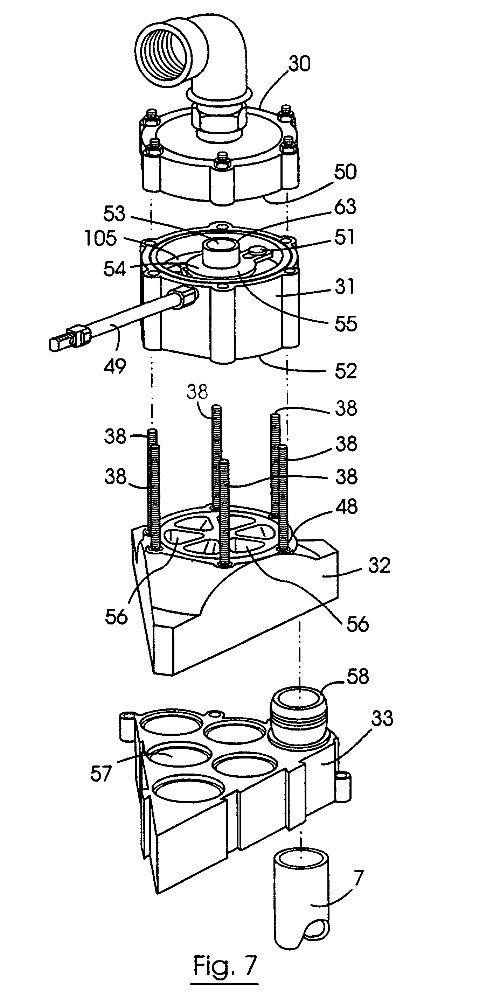

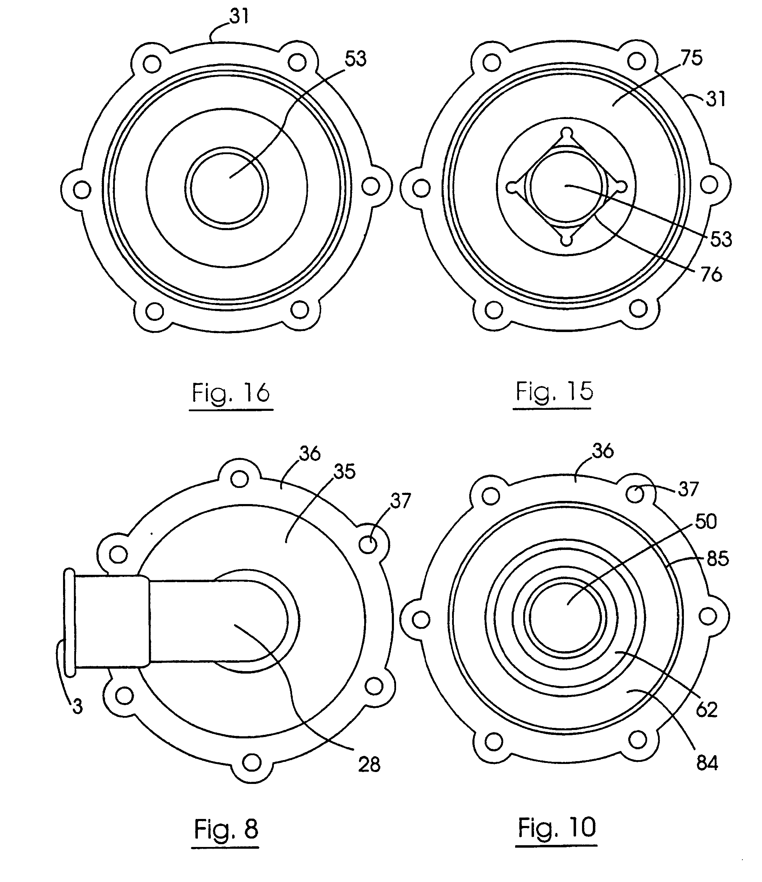

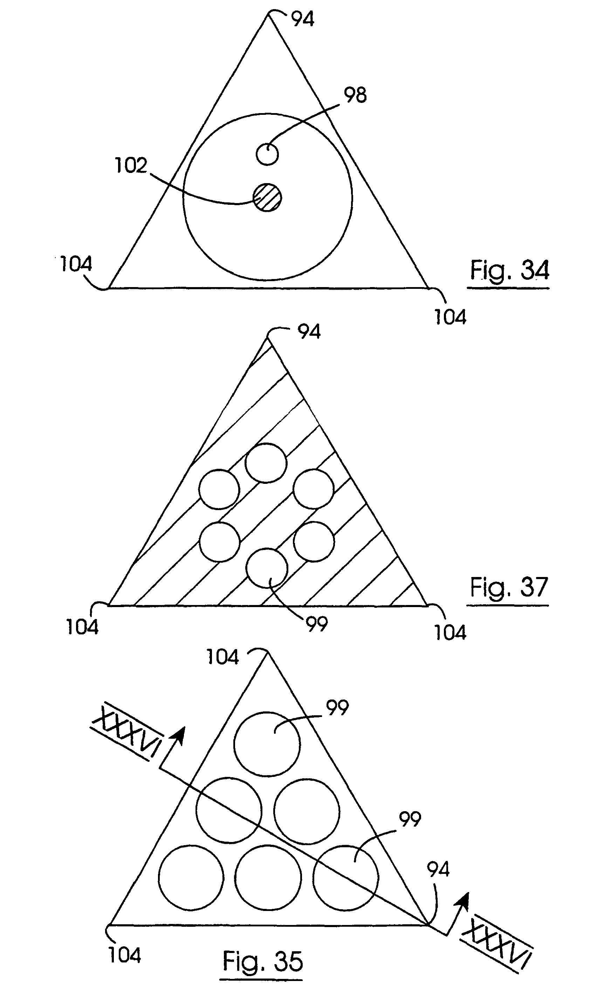

Figs. 5 to 41 show various embodiments of a fluid mixing system of the invention generally indicated by the reference numeral 18 together with various embodiments of a valve 19 of the invention adapted for use in the fluid mixing systems 18 of the invention.

The fluid mixing system 18 is a sequentially unconfined fluid mixing system particularly adapted for use in anaerobic digesters 11 of varying shapes, volume and the like.

As shown in particular in Fig. 5, a fluid mixing system 18 of the invention is made up of a valve 19 in the form of a primary or single valve 20 in communication with the primary gas pipe 25. The primary valve 20 is provided with a primary gas inlet port 3 and six outlet ports 27. The primary valve 20 is in communication with a secondary combination 21 of secondary valves 22 identical to the valve 19 by pipes 7. Accordingly, each of six secondary valves 22 is in communication with the primary valve 20 via a pipe 7 extending from an inlet port 26 in each secondary valve 22 (which corresponds with the primary gas inlet port 3 on the primary valve 20) and one of the six outlet ports 27 on the primary valve 20. Accordingly, the primary valve 20 and the secondary combination 21 together define a valve cascade with the primary valve 20 being upstream of the secondary valves 22 of the secondary combination 21. Each secondary valve 22 is in turn in communication with a downstream tertiary valve 24 (again identical to the valve 19) arranged in a tertiary combination 23. The secondary valves 22 of the secondary combination 21 are in communication with one tertiary valve 24 of the tertiary combination 23 by pipes 7 which extend between an outlet port 27 of each secondary valve 22 and an inlet port 26 of a tertiary valve 24 of the tertiary combination 23. Accordingly, where the valves 19 of the primary valve 20, the secondary valves 22 and the tertiary valves 24 are each provided with one inlet port 26 and six outlet ports 27, the secondary combination 21 can be made up of up to six secondary valves 22 and the tertiary combination 23 can be made up of thirty six tertiary valves 24.

The primary valve 20 is located upstream of the secondary combination 21 while the secondary combination 21 is located upstream of the tertiary combination 23 so that fluid mixing system 18 is made up of a three-layer cascade. Each tertiary valve 24 can be provided with up to six pipes 7 which extend from the outlet ports 27 of each tertiary valve 24 to define an injection port 10 at its free end.

The injection port 10 of each pipe 7 can be positioned as required within a digester tank 11 as shall be explained more fully below. Accordingly, fluid, typically gas, to be injected into the contents of a digester 11 can be injected through the primary gas pipe 25, through the primary gas inlet port 3 into the primary valve 20 and in turn into selected secondary valves 22 of the secondary combination 21 and finally through the tertiary valves 24 of the tertiary combination 23 to exit from one of two hundred and sixteen pipes 7 extending from the tertiary valves 24 to define two hundred and sixteen injection ports 10 within the digester 11.

Accordingly, the primary valve 20, the secondary combination 21 and the tertiary combination 23 together facilitate injection of a fluid through a single injection port 10 from the primary gas pipe 25 to effect mixing within a digester 11.

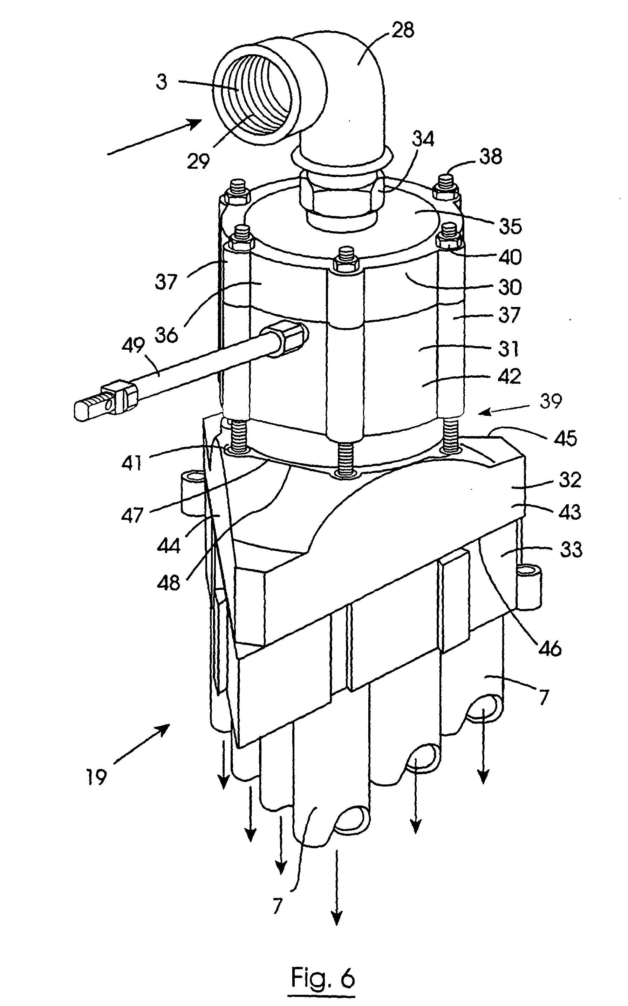

Figs. 6 to 14 show a first embodiment of a valve 19 for use in a system 18 of the invention. However, it will be appreciated by those skilled in the art, that the system 18 of the invention may be operated with many rotary valve types to achieve combinations of valves which result in a fluid mixing system having a cascading effect as previously described.

As shown in Figs. 6 to 14, a valve 19 for use in the fluid mixing system 18 of the invention is made up of three parts namely a head 30 mounted on a rotary valve portion 31 which is in turn mounted on a base 32. The head 30 is provided with an inlet pipe fitting 28 for receiving fluid such as gas from a pipe 7 or a primary gas pipe 25. The inlet pipe fitting 28 is provided with an internal screw thread 29 for attachment to the pipe 7 or the primary gas pipe 25.

The head 30 is made up of a circular top wall 35 having a side wall 36 depending therefrom. The side wall 36 is contoured to define substantially vertically disposed barrels 37, having an opening 41 at each end thereof, in the side wall 36 for receiving threaded support bars 38 which extend between the head 30, the rotary valve portion 31 and the base 32. As shown in the drawings, six threaded support bars 38 and six corresponding barrels 37 are circumferentially spaced about the side wall 36 to define a support frame 39. The head 30 is secured onto the frame 39 by bolts 40 secured against the top wall 35 adjacent at the support hole 41.

A threaded nipple 34 is located between the inlet pipe fitting 28 and the top wall 35 of the head 30 to secure the pipe fitting 28 to the head 30.

The rotary valve portion 31 is substantially cylindrical in shape and defined by a rotary valve portion side wall 42 which is also provided with substantially vertically disposed barrels 37 adapted to be contiguous with the barrels 37 of the head 30 so that the threaded support bars 38 extend through the barrels 37 of the rotary valve portion 31 into the corresponding barrels 37 of the head 30.

A piston 49 extends laterally outwards from the side wall 42 of the rotary valve portion 31 for controlling movement of fluid through the valve 19 as shall be explained more fully below.

The base 32 is substantially triangular when viewed in plan and is made up of three side walls 43,44,45 respectively. The base 32 is further provided with a bottom wall 46 and a top wall 47 which is contoured to define a substantially circular top face 48 adapted to enjoy an abutting relationship with the circular side wall 42 of the cylindrical rotary valve portion 31.

The bottom wall of the base 32 is shaped to form a substantially mating face with corresponding walls of a non-return valve block or a pipe manifold 33 on which the valve 19 of the invention is mountable. The pipe manifold or non-return valve block 33 is adapted to receive six pipes 7 which can extend from the pipe manifold or non-return valve block 33 to form the injection ports 10 at their free ends.

The head 30 is provided with a bottom wall 84 at its end remote from the inlet pipe fitting 28. The bottom wall 84 is provided with a central through opening 50 in communication with the primary gas pipe 25 so that fluid medium may be conveyed from the primary gas pipe 25 to the rotary valve portion 31. The bottom wall 84 is further provided with a downwardly depending annular skirt or lip 85 located between the opening 50 and the side wall 36 to form a fluid tight seal with the rotary valve portion 31 as shall be explained more fully below.

An annular seal 62 also recessed into the bottom wall 84 of the head 30 between the skirt 85 and the through opening 50 also to ensure a fluid tight seal with the rotary valve portion 31.

As previously described, the rotary valve portion 31 is substantially cylindrical in shape and is defined by a rotary valve portion side wall 42. A recessed top chamber 51 co-operable with the bottom wall 84 of the head 30 is defined by the rotary valve portion side wall 42. The recessed top chamber 51 has an annular bottom wall 105 which together with the side wall 42 is adapted to house a valve control mechanism 54 within the top chamber 51. A communicating port pipe or spool 63 is located within the opening 106 defined by the annular bottom wall 105 and defines a central communicating port 53 to facilitate passage of fluid through the rotary valve portion 31 from the head 30 to the base 32.

Internally, the communicating port pipe 63 is provided with a transverse support bar 71 disposed substantially perpendicular to the longitudinal axis of the communicating port pipe 63.

The communicating port pipe 63 is cylindrical in shape and is oriented with its longitudinal axis disposed along the central longitudinal axis of the valve 19. The communicating port pipe 63 stands proud of the side wall 42 of the rotary valve portion 31 to enjoy a male-female relationship with the through opening 50 in the head 30 whereby the communicating port pipe 63 is received in the through opening 50. The communicating port pipe 63 extends through the opening 106 of the bottom wall 105 of the chamber 51 of the rotary valve portion 31 to the bottom wall 52 of the rotary valve portion 31 and is closed at its bottom end to define a bottom wall 86 in the communicating port pipe 63. However, the communicating pipe 63 is provided with a slot 72 in its side wall adjacent the bottom wall 86 for facilitating passage of fluid through the communicating pipe 63 into chamber like segmental ports 73 defined adjacent the rotary valve bottom 52. The communicating pipe 63 is rotatable about its longitudinal axis so that the slot 72 can communicate with individual segmental ports 73 of the rotary valve portion 31.

Rotation of the communicating pipe 63, and accordingly, the slot 72, is controllable by the valve control mechanism 54. The valve control mechanism 54 is made up of a teeth and ratchet mechanism 55 which is in turn in communication with the piston 49 so that rotation of the communicating port pipe 63 can be remotely and automatically controlled by the piston 49.

In an alternative embodiment of the value for use in the invention, the teeth and ratchet mechanism 55 can be replaced by electrical control means.

The teeth and ratchet mechanism 55 is made up of an annular plate 66 adapted to accommodate the communicating port pipe 63 within the annular hole of the annular plate 66. The annular plate 66 is provided with a laterally extending mounting 67 attached to a piston arm 64 of the piston 49 so that extension and retraction of the piston arm 64 causes the annular plate 66 to rotate about the communicating port pipe 63. The annular plate 66 is mounted in turn on a toothed annular cylinder 68 mounted over the communicating port pipe 63 and fixed to the communicating port pipe 63 so that extension and retraction of the piston arm 64 causes the annular plate 66, the toothed cylinder 68 and finally the communicating port pipe 63 to rotate about its longitudinal axis so that the slot 72 moves from segmental port 73 to segmental port 73 to facilitate fluid flow to the ports 73.

The teeth of the toothed cylinder 68 are engageable with a finger 69 mounted on the wall 105 between the toothed cylinder 68 and the side wall 42 of the rotary valve portion 31. The finger 69 is attached to a spring 70 so that the finger 69 is pivotable about an axis disposed parallel to the longitudinal axis of the communicating port pipe 63 so that the finger 69 is adapted to ride over the teeth of the toothed cylinder 68 when the toothed cylinder 68 is rotated in a first direction but will prevent rotation of the toothed cylinder 68 in a reverse direction by engaging the teeth of the toothed cylinder 68. The toothed cylinder 68, the communicating port 63 and segmental ports 63 are calibrated so that the slot 72 is moved from segmental port 73 to segmental port 73 in a single rotation of the toothed cylinder by one tooth.

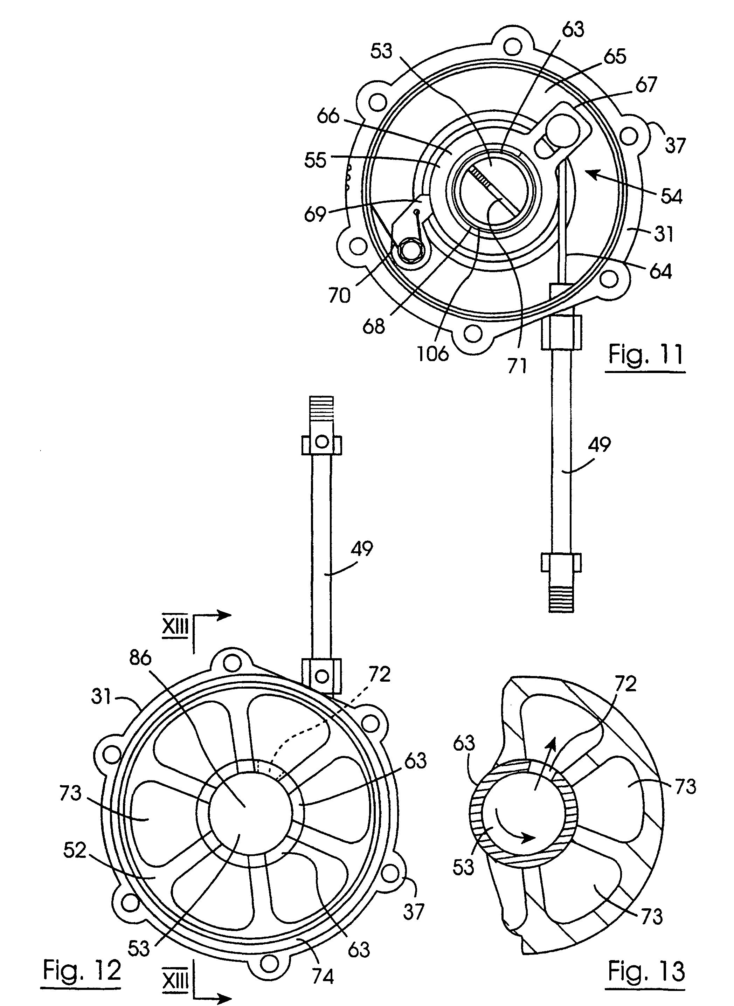

Extension and retraction of the piston arm 64 of the piston 49 facilitates rotational movement of the communicating pipe port 63 in one direction only. As shown in Fig. 13, the communicating pipe port 63 is adapted to rotate in an anti-clockwise direction only in the present embodiment.

Accordingly, the valve control mechanism 54 facilitates movement of fluid through the rotary valve portion 31 into a segmental port 73 in the rotary valve portion 31 which in turn can communicate with the base 32.

The base 32 is provided with segmental-shaped through ports 56 on the circular top face 48 of the base 32 which are located on the top face 48 to be contiguous with the segmental ports 73 of the rotary valve portion 31. Accordingly, fluid can communicate between the segmental ports 73 of the rotary valve portion 31 and the segmental through ports 56 of the base 32.

The segmental through ports 56 extend through the base 32 and are internally defined within the base 32 by an internal wall 59 to ensure a continuous fluid passage between the segmental ports 73 of the rotary valve portion 31 and through holes 57 disposed in a triangular arrangement on the pipe manifold or non-return valve block 33 as shall be explained more fully below.

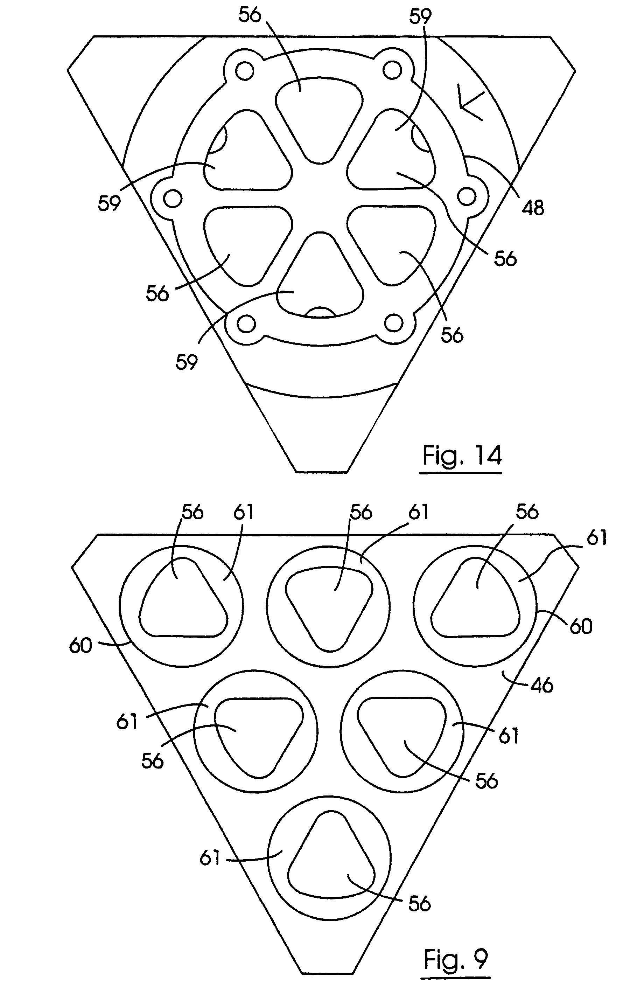

Accordingly, as shown in Fig. 9, the through ports 56 are arranged in the bottom wall 46 of the rotary valve portion 31 in a triangular cluster pattern corresponding to the triangular pattern of the valve block through holes 57.

In addition, the internal sloped walls 59 of the through ports 56 are shaped to define a recessed annular wall 60 and circular opening 61 for each through port 56 in the bottom wall 46 of the rotary valve block portion 31. The dimensions of the through ports 56 together with the cross sectional area of the through ports 56 are arranged such that the cross sectional area corresponds to the cross sectional area of the through holes 57 in the pipe manifold or non-return valve block 33 to maintain the fluid pressure within the through ports 56 as constant as possible.

As shown in Fig. 12, the rotary valve portion 31 is provided with a peripheral annular seal 74 adapted to cooperate with the skirt 85 on the head 30 to ensure a fluid tight seal between the head 30 and the rotary valve portion 31.

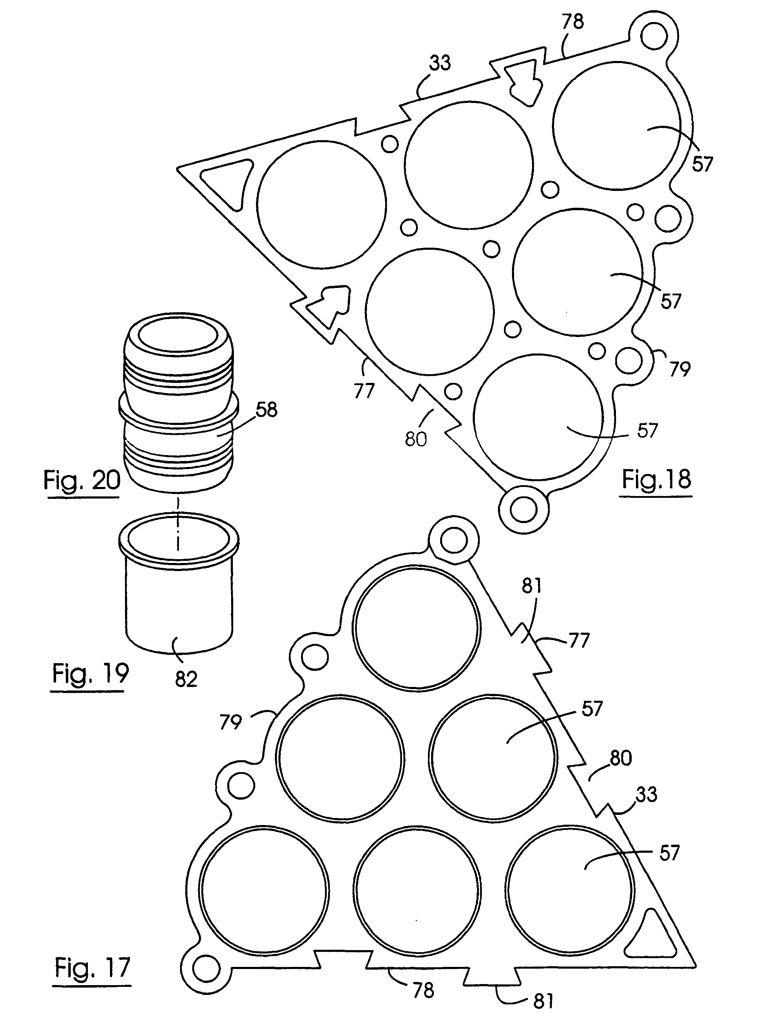

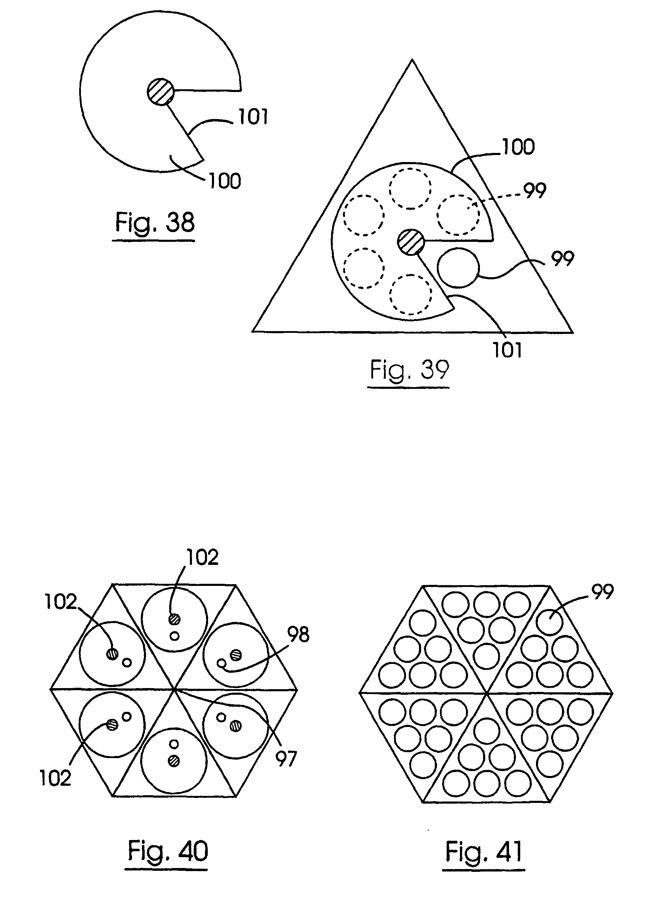

Figs. 15 and 16 show top and bottom plan views respectively of an alternative arrangement of rotary valve portion 31 in which an insert 75 is located within the chamber 65 of the rotary valve portion 31 adapted to receive a rotating disk (in place of the spool 63) which is more fully described in relation to Fig. 38. The insert 75 is shaped to define a square centrally located opening 76 for receiving a drive means for the rotating disk.

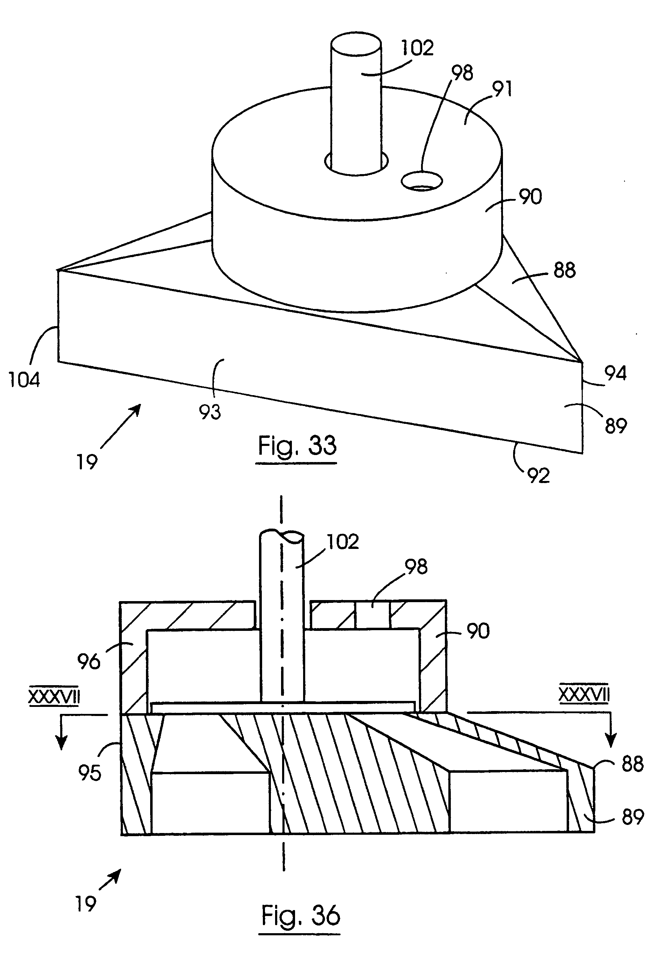

The base 32 is adapted to be mountable on the pipe manifold or non-return valve block 33. The pipe manifold or non-return valve block 33 is substantially segmental in shape and accordingly is provided with two side walls 77,78 respectively and a curved outside wall 79 connecting the side walls 77,78. The pipe manifold or non-return valve block 33 is segmental in shape so that a combination of six pipe manifolds or non-return valve blocks 33 is adapted to form a hexagonal non-return valve block as shall be explained more fully below in relation to the embodiment of the valve described in Figs. 33 to 41.

Accordingly, the side walls 77,78 of the pipe manifold or non-return valve block 33 are provided with indents or slots 80 adapted to receive complementary teeth 81 also located on the side walls 77,78 of an adjacently disposed pipe manifold or non-return valve block 33.

A fluid tight fit between the circular openings 60 of the through ports 56 and the valve block through holes 57 is provided by a linking cylindrical pipe insert 82 adapted to insert in the through holes 57 of the pipe manifold or non-return valve block 33 which is in turn adapted to receive a resilient connector/linkage 58 insertable in the insert 82 at one end thereof and insertable in the circular openings 60 of the through ports 56 in the base 32 of the valve 19 of the invention.

Finally, pipes 7 can be inserted in the through holes 57 to link the valve 19 to another valve 19 or alternatively to form a combination of cascading valves 19 or alternatively to form injection ports 10.

In use, the valve 19 is assembled as described above. The inlet pipe fitting 28 is connected to a primary gas pipe 25 while the piston 49 is connected to a controller (not shown). The primary gas pipe is in turn in communication with a gas storage container or compressor skid or the like. The rotary valve portion 31 of the valve 19 is rotable by the piston 49 as previously described so that gas from the compressor skid or the like is conveyed through the primary gas pipe 25, the inlet pipe fitting 28, the through opening 50 of the head 30, the communicating pipe port 63 and the slot 72 of the rotary valve portion 31 into the segmental port 73 of the rotary valve portion 31 and in turn through the through port 56 in the base 32 corresponding to the segmental port 73. The gas is then conveyed from the circular opening 60 of the segmental through port 56 into the corresponding valve block through hole 57 and in turn into the corresponding pipe 7 inserted in the pipe manifold or non-return valve block 33. Accordingly, the pipe 7 selected is determined by the communicating port pipe 63 and the slot 72. As will be appreciated by those skilled in the art, the number of pipes 7 connected to the valve 19 may be reduced to fewer than six according to the number of injection ports 10 required or indeed according to the number of secondary/tertiary valves 19 to which it is desired to connect or cascade the valve 19.

The rotary valve portion 31 is therefore mounted over the threaded support bars 38 on the base 32 by inserting the threaded support bars 38 through the barrels 37 on the side wall 42 of the rotary valve portion 31. The head 30 is in turn mounted on the rotary valve portion 31 by inserting the threaded support bars 38 through the barrels 37 in the side wall 36 of the head 30. Gas received through the primary gas inlet port 3 from a compressor or the like can travel through the inlet pipe fitting 28 into the opening 50 of the head 30 to the communicating port 53 within the rotary valve portion 31 defined by the communicating port pipe 63 and to the valve control mechanism 54. The communicating port pipe 63 is in turn rotatable so that the slot 72 adjacent the bottom wall 84 of the communicating port pipe 63 is aligned with a segmental port 73 of the rotary valve portion 31 adjacent the bottom 52 of the rotary valve portion 31. Each segmental port 73 is contiguous with the through ports 56 of the base 32 so that the fluid may be conveyed into the selected valve block through hole 57 and from there into the pipe 7 extending from the through hole 57 which in turn terminates at an injection port 10. Alternatively where the valve 19 is in communication with a secondary valve 22 or a tertiary valve 24 the pipe 7 can terminate at the primary gas inlet port 3 of that secondary valve 22 or tertiary valve 24. Accordingly, by combining the valves 19 in a cascading format, the system 18 of the present invention may be arrived at.

However, as will be appreciated by those skilled in the art, and as stated previously, the cascading effect may also be secured by using alternative valve arrangements to the valve 19 for use in the present invention without departing from the scope of the present invention.

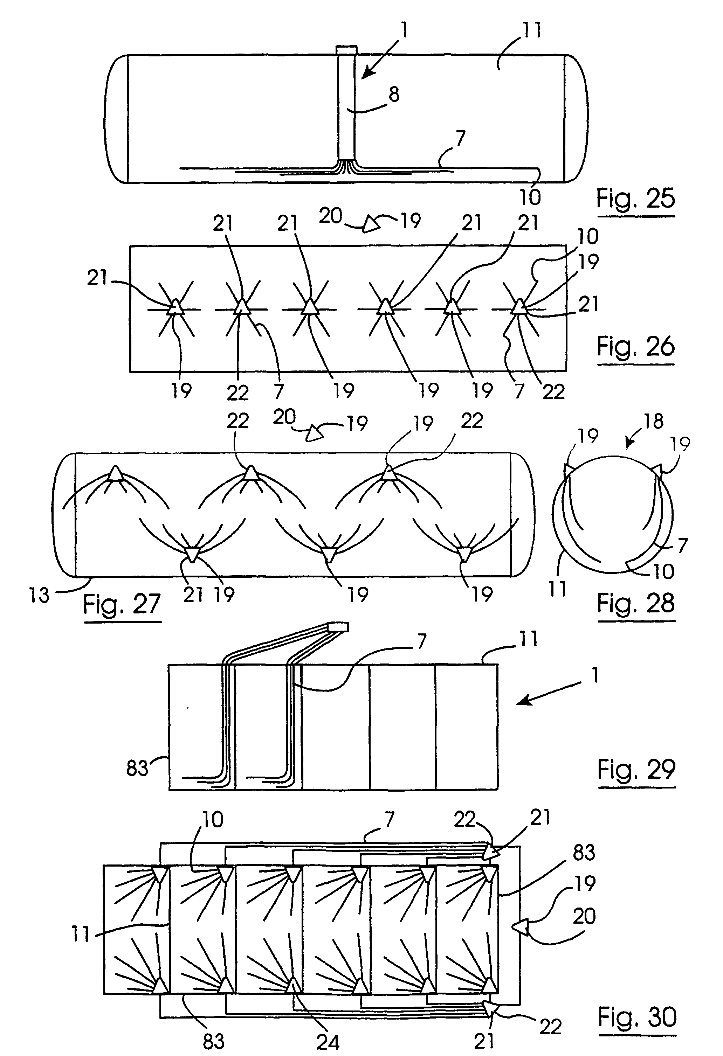

The valves 19 are suitable for use in the fluid mixing systems 18 of the invention. Figs. 21 to 32 shown various embodiments of fluid mixing systems 18 of the invention in which digester tanks 11 of various construction are fitted with the valves 19 to form a cascading effect to provide systems of the invention 18 of simplified engineering complexity as compared with fluid mixing systems 1 of the prior art some of which are also shown in Figs. 21 to 32 by way of comparison only.

However, it will be appreciated that the fluid mixing systems 18 of the invention comprising the valves 19 can find application in any fluid mixing systems e.g. in the petrochemical industry and it is not intended that the scope of the present invention should be restricted to anaerobic digester tank applications only.

The system 18 of the invention comprising the rotary valves 19 are adapted to operate with the gas from anaerobic digesters 11, which consists mostly of methane. Methane is flammable in air. Accordingly, drive or control systems for the fluid mixing system 18 of the invention must be suitable for flammable gases. The piston 49 of the valve 19 is preferably located internal to the valve 19 to eliminate shaft seals in the rotary valves 19. However, use of a pneumatic piston 49 could lead to the leak of air into the gas stream which is unacceptable. Accordingly, a hydraulic piston 49 is preferable. Alternatively, a shaft seal and exterior drive from an electric motor could be used in particular on a thirty six port valve 19 although such an arrangement could be uneconomic in a cascading six port system.

Each combination of a cascade must operate at a different speed, and so each combination is preferably driven by a separate drive. This is to ensure that over a period of time every injection port 10 receives its full quota of stirring.

For example, in use each combination of valves 19 receives hydraulic oil from a master piston, the two ends of which are connected to the two ends of the valve drive piston. All the drive pistons 49 in a combination of a cascade are connected together. The master drive piston must have a displacement greater than the combined displacement of all the pistons 49 it is driving.

The master piston is driven by a crank attached to the output shaft of a reduction gearbox in turn driven either by its own dedicated electric motor or by the same motor which drives the gas compressor pump which provides the gas for the gas injection.

Typically, the master piston will cycle at about 15 seconds per cycle. As the master piston cycles back and forth it displaces hydraulic oil into the valve drive pistons 49 so that they also cycle back and forth, so indexing the rotary valves 19. As already stated the master piston has a slightly greater displacement. Accordingly, as it reaches the end of its stroke some oil is spilt through a relief valve back to the hydraulic oil reservoir. When the piston cycles in the opposite direction oil is drawn through a non-return valve from the reservoir to make up the deficit. This system ensures that each valve drive piston 49 travels its full displacement and that there is a continual flushing of hydraulic oil through the system to remove any trapped air.

In order to ensure that the valve 19 can be monitored externally, two methods of valve 19 indication can be employed namely:
1. A small permanent magnet can be attached to (the nonmagnetic typically stainless steel) spool 63. As the valve 19 rotates it passes a fully encapsulated magnetic reed switch which is then able to transmit an electrical signal indicating valve rotation.
2. A small glass window or other clear material can be incorporated into the body of the valve 19 so movement of the valve 19 can be visualised.

Fig. 21 shows a digester tank 11 having a roof 9, a side wall 13 and a digester tank floor 12 of substantially inverted frusto-conical shape. The digester tank 11 is fitted with a fluid mixing system 1 of the prior art as previously described in relation to Figs. 1,2 and 3. As shown in Fig. 21, the injection ports 10 of the pipes 7 from the pipe column 8 are urged upwards towards the digester tank roof 9 by the side walls of the frusto-conical digester tank floor 12 so that severe bends 87 are defined in the pipes 7 adjacent the digester tank floor 12. The bends 87 are highly undesirable and gas or fluid backflow within the pipes 7 can therefore result giving rise to highly undesirable blockages within the pipes 7 of the column 8. However, as shown in Fig. 22, the tank 11 of Fig. 21 can be fitted with a plurality of valves 19 in accordance with the present invention to define a secondary combination 21 of secondary valves 22 within the digester tank 11. For the sake of clarity only four secondary valves 22 are shown in Fig. 22. However, it will be appreciated that the tank 11 of Fig. 22 can in fact be provided with six secondary valves 22 in communication with a single primary valve 21 (not shown) which would generally be located externally of the tank 11. Each secondary valve 22 of the secondary combination 21 can be distributed throughout the digester tank 11 so that the pipes 7 from each outlet port 27 of the secondary valves 22 extend downwards towards the digester tank floor 12 without an upwardly disposed bend 87 thereby eliminating backflow whilst ensuring an even distribution of injection ports 10 adjacent the digester tank floor 12.

Fig. 23 shows an alternative construction of a digester tank 11 in which the digester tank 11 is substantially "egg-shaped" and is fitted again with a fluid mixing system 1 of the prior art made up of a central pipe column or cluster 8. Due to the curved shape of the digester tank floor 12, the pipes 7 of the pipe column 8 are, like the pipes 7 of the pipe column 8 shown in Fig. 21, urged upwards by the digester tank floor 12 so that a bend is formed in the pipes 7 which can also give rise to backflow and blockage within the pipes 7.

In contradistinction, as shown in Fig. 24, the egg-shaped digester 11 can be provided with a secondary combination 21 of valves 19 to produce a system 18 of the invention in which a primary valve 20 is located externally of the digester 11 whilst secondary valves 22 forming the secondary combination 21 are circumferentially spaced about the digester 11 to ensure an even distribution of injection ports 10 without the pipes 7 suffering from bends 87. Clearly, such an arrangement is not possible with the cluster 8 of the system 1 of the prior art.

Fig. 25 shows a side elevation of an elongate cylindrical digester tank 11 with a fluid mixing system of the prior art, in which the longitudinal axis of the cylindrical digester tank 11 is disposed along a substantially horizontal axis so that the pipe cluster 8 is oriented substantially perpendicular to the longitudinal axis of the digester tank 11 and the pipes 7 from the cluster 8 are urged outwards along the digester tank floor 12 substantially parallel to the longitudinal axis of the digester tank 11 pipes 7 of extreme length are required in order to ensure an even distribution of injection ports 10 throughout the digester tank 11. Accordingly, the shape of the digester tank 11 requires a considerable length of pipes 7 a complex arrangement throughout the digester tank 11.

In contradistinction, Fig. 26 shows a top plan schematic view of the digester tank 11 of Fig. 25 provided with a fluid mixing system 18 in accordance with the present invention in which a primary valve 20 is disposed externally of the digester tank 11 and secondary valves 22 defining a secondary combination 21 are evenly distributed throughout the digester tank 11 to ensure even distribution of injection ports 10. As previously described, the primary valve 20 is in communication with each secondary valve 22 through a pipe 7.

Fig. 27 shows yet an alternative arrangement of valves 19 within the digester tank 11 of Figs. 25 in which the primary valve 20 is located externally of the digester tank 11 while the secondary valves 22 can be evenly distributed about the curved side wall 13 of the cylindrical tank 11.

Fig. 28 shows yet an alternative arrangement of valves 19 for the digester tank of Fig. 11 in accordance with the system 18 of the invention. Fig. 28 is an end elevation of the digester tank 11 and shows a system of the invention 18 whereby two valves 19 are mounted externally of the side wall 13 of the tank 11 so that pipes 7 extend inwards into the digester tank 11 to provide distribution of twelve injection ports within the tank 11.

Fig. 29 shows a side elevation of a digester tank 11 made up of a series of secondary tanks 83 and fitted with a fluid mixing system 1 of the prior art. As shown in Fig. 29, the fluid mixing system 1 is made up of a primary gas inlet port 3 and multiple port valve 4 and pipes 7 extending into each tank 83 of the series secondary tanks 83. For the sake of clarity pipes 7 have been shown extending into two secondary tanks 83 of the series of secondary tanks 83. However, Fig. 30 shows the digester tank 11 of Fig. 29 fitted with a system 18 in accordance with the present invention in which a primary valve 20 is located externally of the digester tank 11 and is in turn in communication with two secondary valves 22 forming a secondary combination 21. The secondary valves 22 are in turn in communication by pipes 7 with six tertiary valves 24 each located within each secondary tank 83 to define a tertiary combination 23. Accordingly, injection ports 10 can be located and evenly distributed throughout each secondary tank 83 whilst the location of each tertiary valve 24 within each secondary tank 83 may be selected to maximise efficiency through distribution of the injection ports 10 as required.

Fig. 31 shows a schematic plan view from above of a double cylindrical tank arrangement fitted with a fluid mixing system 1 of the prior art in which pipes 7 terminating in injection ports 10 extend from a multiple port rotary valve 4 into each of the tanks 11 of the double tank. As shown in Fig. 31, the arrangement of the systems 1 of the prior art demands considerable pipe lengths 7 thereby increasing the engineering complexity of the system. In contradistinction, Fig. 32 shows the tanks 11 of Fig. 31 provided with a fluid mixing system 18 of the present invention in which pipe lengths 7 are minimised and injection ports 10 can be efficiently distributed throughout the tanks 11 with minimal pipes 7. More particularly, as shown in Fig. 32, the system 18 is provided with a primary valve 20 in communication with secondary valves 22 to define a secondary combination 21 within each of the tanks 11 by pipes 7. Each of the secondary valves 22 is provided with pipes 7 which terminate at injection ports 10 which may be evenly distributed throughout each of the digester tanks 11.

Figs. 33 to 41 show an alternative embodiment of a system 18 comprising a valve 19, in accordance with the present invention. More particularly, referring to Figs. 33 to 41, there is illustrated a system 18 according to the invention, of valves indicated generally by the reference numeral 18 which comprises a plurality, in this case six, identical valves also according to the invention which are indicated generally by the reference numeral 19 for controlling the delivery of a fluid, in this case a gas or a liquid, for delivery into a digester 11 for mixing the fluid with other fluids within the digester 11.

Each system 18 of the present embodiment comprises six identical valves to form a predetermined pattern, which in this embodiment of the invention, defines a hexagonal shaped figure when viewed in plan (see Figs. 40 and 41). Each valve 19 comprises a housing 88 comprising a lower solid body portion 89 and an upper hollow body portion 90. The upper body portion 90 comprises a top wall 91, and the lower portion 89 defines a bottom wall 92. The bottom wall 92 is of triangular shape, and the top wall 91 is of circular shape. A pair of side walls 93 which diverge from an apex 94 extend upwardly from the bottom wall 92, and a side wall 95 extends upwardly from the bottom wall 92, and extends between the side walls 93 at their respective opposite ends to the ends which define the apex 94. An intermediate side wall 96 joins the top wall 91 and the lower body portion 89.

When combined together to form the system 18, the apices 94 of the respective housing 88 of the valve 19 define a centre 97 of the hexagonally shaped figure. Each valve 19 comprises one inlet port 98 which is located in the top wall 91 and a plurality, namely six outlet ports 99 which are located in the bottom wall 92. The outlet ports 99 communicate with the inlet port 98 through the interior of the housing 88 as can be seen in Fig. 36. A means for sequentially communicating the inlet port 98 with the respective outlet ports 99 comprises a rotary disk 100 which is rotatably mounted within the housing 88 and is provided with a communicating opening 101 for communicating the inlet port 98 sequentially with the outlet ports 99 as the opening 101 is sequentially aligned with the respective outlet ports 99 as the rotary disk 100 rotates. A drive motor (not shown) mounted on the top wall 91 rotates the rotary disk 100 by a shaft 102 at a desired rotational speed.

When mounted together in the system 18 adjacent side walls 93 of the adjacent valves 19 abut each as can be seen in Figs. 40 and 41. Suitable mounting brackets (not shown) such as the teeth 81 and slots 80 shown in Fig. 17 are provided on the respective top and bottom walls 91 and 92 for securing the valves 19 together in the system 18.

For convenience and for facilitating connection of the valves 19 of the system 18 into the other similar systems 18 to form a cascade of valves, the outlet ports 99 are in arranged in the bottom wall 92 so that the centre of the ports describe a triangular. In other words, one of the outlet ports 99 is located at the apex 94, and two of the outlet ports 99 are located at the other two apices 104 of the housing 3. The remaining three outlet ports 99 are located intermediate the other three outlet ports 99.

The valve for use in the invention may be formed from any suitable materials such as cast iron or injection moulded plastics such as ABS. The spool of the valve of the invention can also be made from stainless steel.

## Claims

1. A digester fluid mixing system (18) comprising a first valve means (19) for receiving fluid into the system (18) having at least one inlet port (3) and a plurality of outlet ports (27) for the fluid **characterised in that** the first valve means (19) is in communication with a plurality of second valve means (19), the first and second valve means (19) having a plurality of outlet ports (27) to provide a cascading fluid mixing system (18), the first and second valve means (19) comprising a selecting valve (19) for selecting an outlet port (27) for the fluid, the selecting valve being a rotary valve comprising means (63, 100) for sequentially communicating the inlet port (3, 98) with the respective outlet ports (27), the outlet ports (27) of the first valve means (19) located at an upstream end of the cascade being connected to the inlet ports (3, 98) of the second valve means (19) in the cascade located downstream of the upstream valve (19) and each outlet port (27) being communicable with an injection port (10) through a pipe (7) for injecting fluid into a digester tank (11).

2. A fluid mixing system (18) as claimed in claim 1 **characterised in that** the first valve means (19) and the second valve means (19) are identical.

3. A fluid mixing system (18) as claimed in a claim 1 or claim 2 **characterised in that** the first valve means (19) and the second valve means (19) comprise six outlet ports (27), and preferably, twelve outlet ports (27), and alternatively, four outlet ports (27).

4. A fluid mixing system (18) as claimed in any of claims 1 to 3 **characterised in that** the first valve means (19) comprises six outlet ports (27) in communication with up to six second valve means (19,22) comprising six outlet ports (27).

5. A fluid mixing system (18) as claimed in claim 4 **characterised in that** the second valve means (19,22) are in communication with up to thirty six tertiary valve means (19,24) each having six outlet ports (27).

6. A fluid mixing system (18) as claimed in any of Claims 1 to 5 **characterised in that** the rotary valve (19) comprises a housing (30,31,32,33) having one inlet port (3,98) and a plurality of outlet ports (27) and a means (63,100) for sequentially communicating the inlet port (3,98) with the respective outlet ports (27).

7. A fluid mixing system (18) as claimed in claim 6 **characterised in that** the communicating means (100) comprises a rotatably mounted disk (100) having a communicating opening (101) extending therethrough for sequentially communicating the inlet port (98) with the outlet ports (99), or alternatively, the communicating means (63) comprises a rotatably mounted spool (63) having a communicating opening (72) extending therethrough for sequentially communicating the inlet port (3) with the respective outlet ports (27).

8. A fluid mixing system (18) as claimed in claim 6, the rotary valve comprising hydraulic control means (49, 54) for sequentially communicating the inlet port (3) with the respective outlet ports (27), the hydraulic control means (49, 54) comprising a piston (49) and a tooth and ratchet mechanism (55) for controlling movement of the spool (63), the housing (30, 31, 32, 33) being shaped for co-operating with the housing (30, 31, 32, 33) of at least one other similar valve (19) to form in combination a compact assembly of the valves (19) in a predetermined pattern.

9. A digester tank (11) comprising a fluid mixing system (18) as claimed in any preceding claim.

## Patentansprüche

1. Ein Faulbehälterfluidmischsystem (18), das ein erstes Ventilmittel (19) zum Empfangen von Fluid in dem System (18) beinhaltet, das mindestens einen Einlasskanal (3) und eine Vielzahl von Auslasskanälen (27) für das Fluid aufweist, **dadurch gekennzeichnet, dass** das erste Ventilmittel (19) mit einer Vielzahl von zweiten Ventilmitteln (19) in Verbindung steht, wobei das erste und das zweite Ventilmittel (19) eine Vielzahl von Auslasskanälen (27) aufweisen, um ein kaskadiertes Fluidmischsystem (18) bereitzustellen, wobei das erste und das zweite Ventilmittel (19) ein Auswahlventil (19) zum Auswählen eines Auslasskanals (27) für das Fluid beinhaltet, wobei das Auswahlventil ein Drehventil ist, das Mittel (63, 100) zum sequenziellen Verbinden des Einlasskanals (3, 98) mit den einzelnen Auslasskanälen (27) beinhaltet, wobei die Auslasskanäle (27) des ersten Ventilmittels (19), die an einem stromaufwärts gelegenen Ende der Kaskade befindlich sind, an die Einlasskanäle (3, 98) des zweiten Ventilmittels (19) in der stromabwärts von dem stromaufwärts gelegenen Ventil (19) befindlichen Kaskade angeschlossen sind, und jeder Auslasskanal (27) mit einem Einspritzkanal (10) durch ein Rohr (7) zum Einspritzen von Fluid in einen Faulbehältertank (11) verbindbar ist.

2. Fluidmischsystem (18) gemäß Anspruch 1, **dadurch gekennzeichnet, dass** das erste Ventilmittel (19) und das zweite Ventilmittel (19) identisch sind.

3. Fluidmischsystem (18) gemäß Anspruch 1 oder Anspruch 2, **dadurch gekennzeichnet, dass** das erste Ventilmittel (19) und das zweite Ventilmittel (19) sechs Auslasskanäle (27) und vorzugsweise zwölf Auslasskanäle (27) und als Alternative dazu vier Auslasskanäle (27) beinhalten.

4. Fluidmischsystem (18) gemäß einem der Ansprüche 1 bis 3, **dadurch gekennzeichnet, dass** das erste Ventilmittel (19) sechs Auslasskanäle (27) beinhaltet, die mit bis zu sechs zweiten Ventilmitteln (19, 22), welche sechs Auslasskanäle (27) beinhalten, in Verbindung stehen.

5. Fluidmischsystem (18) gemäß Anspruch 4, **dadurch gekennzeichnet, dass** die zweiten Ventilmittel (19, 22) mit bis zu sechsunddreißig tertiären Ventilmitteln (19, 24) in Verbindung stehen, die jeweils sechs Auslasskanäle (27) aufweisen.

6. Fluidmischsystem (18) gemäß einem der Ansprüche 1 bis 5, **dadurch gekennzeichnet, dass** das Drehventil (19) ein Gehäuse (30, 31, 32, 33), das einen Einfasskanal (3, 98) und eine Vielzahl von Auslasskanälen (27) aufweist, und ein Mittel (63, 100) zum sequenziellen Verbinden des Einlasskanals (3, 98) mit den einzelnen Auslasskanälen (27) beinhaltet.

7. Fluidmischsystem (18) gemäß Anspruch 6, **dadurch gekennzeichnet, dass** das Verbindungsmittel (100) eine drehbar montierte Scheibe (100), die eine sich durch diese erstreckende Verbindungsöffnung (101) zum sequenziellen Verbinden des Einlasskanals (98) mit den Auslasskanälen (99) aufweist, beinhaltet, oder als Alternative dazu beinhaltet das Verbindungsmittel (63) eine drehbar montierte Spule (63), die eine sich durch diese erstreckende Verbindungsöffnung (72) zum sequenziellen Verbinden des Einlasskanals (3) mit den einzelnen Auslasskanälen (27) aufweist.

8. Fluidmischsystem (18) gemäß Anspruch 6, wobei das Drehventil hydraulische Steuerungsmittel (49, 54) zum sequenziellen Verbinden des Einlasskanals (3) mit den einzelnen Auslasskanälen (27) beinhaltet, wobei die hydraulischen Steuerungsmittel (49, 54) einen Kolben (49) und einen Zahn- und Sperrklinkenmechanismus (55) zum Steuern der Bewegung der Spule (63) beinhalten, wobei das Gehäuse (30, 31, 32, 33) so geformt ist, dass es mit dem Gehäuse (30, 31, 32, 33) von mindestens einem anderen ähnlichen Ventil (19) zusammenarbeitet, um zusammen mit diesem eine kompakte Anordnung der Ventile (19) in einem vorher festgelegten Muster zu bilden.

9. Ein Faulbehältertank (11), der ein Fluidmischsystem (18) gemäß einem der vorhergehenden Ansprüche beinhaltet.

## Revendications

1. Un système de mélange de fluides de digesteur (18) comportant un premier moyen formant vanne (19) pour recevoir du fluide dans le système (18) ayant au moins un orifice d'entrée (3) et une pluralité d'orifices de sortie (27) pour le fluide, **caractérisé en ce que** le premier moyen formant vanne (19) est en communication avec une pluralité de deuxièmes moyens formant vanne (19), le premier et les deuxièmes moyens formant vanne (19) ayant une pluralité d'orifices de sortie (27) afin de fournir un système de mélange de fluides en cascade (18), le premier et les deuxièmes moyens formant vanne (19) comportant une vanne de sélection (19) pour sélectionner un orifice de sortie (27) pour le fluide, la vanne de sélection étant une vanne rotative comportant un moyen (63, 100) pour mettre en communication de façon séquentielle l'orifice d'entrée (3, 98) avec les orifices de sortie respectifs (27), les orifices de sortie (27) du premier moyen formant vanne (19) situés à une extrémité amont de la cascade étant raccordés aux orifices d'entrée (3, 98) des deuxièmes moyens formant vanne (19) dans la cascade situés en aval de la vanne amont (19) et chaque orifice de sortie (27) pouvant être mis en communication avec un orifice d'injection (10) par l'intermédiaire d'un tuyau (7) pour injecter du fluide dans un réservoir de digesteur (11).

2. Un système de mélange de fluides (18) tel que revendiqué dans la revendication 1 **caractérisé en ce que** le premier moyen formant vanne (19) et les deuxièmes moyens formant valve (19) sont identiques.

3. Un système de mélange de fluides (18) tel que revendiqué dans une revendication 1 ou une revendication 2 **caractérisé en ce que** le premier moyen formant vanne (19) et les deuxièmes moyens formant vanne (19) comportent six orifices de sortie (27) et, de préférence, douze orifices de sortie (27) et, comme variante, quatre orifices de sortie (27).

4. Un système de mélange de fluides (18) tel que revendiqué dans n'importe lesquelles des revendications 1 à 3 **caractérisé en ce que** le premier moyen formant vanne (19) comporte six orifices de sortie (27) en communication avec jusqu'à six deuxièmes moyens formant vanne (19, 22) comportant six orifices de sortie (27).

5. Un système de mélange de fluides (18) tel que revendiqué dans la revendication 4 **caractérisé en ce que** les deuxièmes moyens formant vanne (19, 22) sont en communication avec jusqu'à trente-six moyens formant vanne tertiaires (19, 24) ayant chacun six orifices de sortie (27).

6. Un système de mélange de fluides (18) tel que revendiqué dans n'importe lesquelles des revendications 1 à 5 **caractérisé en ce que** la vanne rotative (19) comporte un logement (30, 31, 32, 33) ayant un orifice d'entrée (3, 98) et une pluralité d'orifices de sortie (27) et un moyen (63, 100) pour mettre en communication de façon séquentielle l'orifice d'entrée (3, 98) avec les orifices de sortie (27) respectifs.

7. Un système de mélange de fluides (18) tel que revendiqué dans la revendication 6 **caractérisé en ce que** le moyen communicant (100) comporte un disque monté de façon à pouvoir tourner (100) ayant une ouverture communicante (101) s'étendant à travers celui-ci pour mettre en communication de façon séquentielle l'orifice d'entrée (98) avec les orifices de sortie (99) ou, comme variante, le moyen communicant (63) comporte une bobine montée de façon à pouvoir tourner (63) ayant une ouverture communicante (72) s'étendant à travers celle-ci pour mettre en communication de façon séquentielle l'orifice d'entrée (3) avec les orifices de sortie (27) respectifs.

8. Un système de mélange de fluides (18) tel que revendiqué dans la revendication 6, la vanne rotative comportant des moyens de contrôle hydrauliques (49, 54) pour mettre en communication de façon séquentielle l'orifice d'entrée (3) avec les orifices de sortie respectifs (27), les moyens de contrôle hydrauliques (49, 54) comportant un piston (49) et un mécanisme à dent et à rochet (55) pour contrôler le déplacement de la bobine (63), le logement (30, 31, 32, 33) étant configuré pour coopérer avec le logement (30, 31, 32, 33) d'au moins une autre vanne (19) similaire afin de former en combinaison un assemblage compact des vannes (19) dans une structure prédéterminée.

9. Un réservoir de digesteur (11) comportant un système de mélange de fluides (18) tel que revendiqué dans n'importe quelle revendication précédente.
